# EUROPEAN PATENT SPECIFICATION

(11) **EP 1 150 049 B1**
(45) Date of publication and mention of the grant of the patent: **15.02.2006**
(21) Application number: 01109380.4
(22) Date of filing: 18.04.2001
(51) Int. Cl.: F16J 15/32

(54) **Rotation shaft seal**
Wellendichtung
Joint d'étanchéité pour arbre tournant

(30) Priority: 24.04.2000 JP 2000121883
(43) Date of publication of application: 31.10.2001
(73) Proprietor: Mitsubishi Cable Industries, Ltd., Hyogo-ken (JP)
(72) Inventor: Baba, Takeshi, Minoshima Factory, Arida-shi, Wakayama (JP); Obata, Hiromi, Minoshima Factory, Arida-shi, Wakayama (JP); Takeda, Kenichi, Minoshima Factory, Arida-shi, Wakayama (JP)
(74) Representative: HOFFMANN EITLE

(56) References cited:
- EP-A- 0 926 408
- US-A- 5 860 656

## Description

This invention relates to a rotation shaft seal used in a compressor for an air conditioner of an automobile with high pressure fluid and a high frequency rotation shaft.

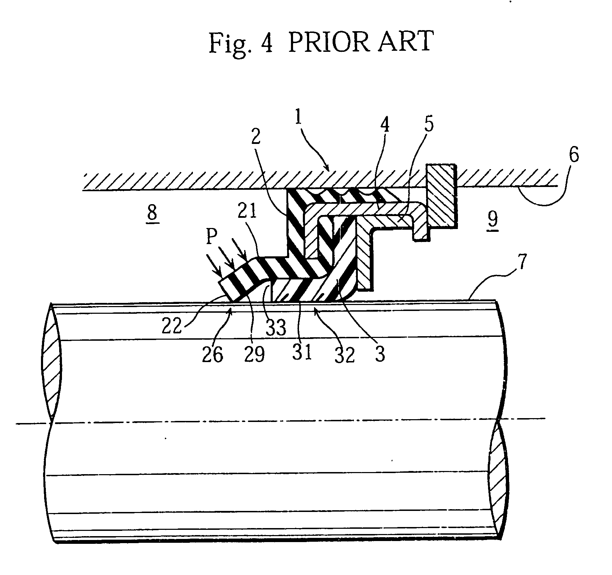

As a conventional rotation shaft seal for sealing the high-pressure fluid, a shaft seal as shown in Figure 4 is known. This rotation shaft seal is disposed between a housing 6 of a compressor and rotation shaft 7 for sealing fluid in a fluid storing chamber 8.

In the construction of the rotation shaft seal, a seal member 2 made of rubber adhered to an outer case 34 and a seal element 3 made of resin (especially, PTFE) having notched grooves 31 formed on a sliding face sliding on the rotation shaft 7 are unified with an inner case 5 in the outer case 4 by caulking.

The seal member 2 of rubber has a lip end portion 22 which gradually diminishes in diameter to the fluid storing chamber 8 side, and a sliding tip portion 26 of the lip end portion 22 contacts the rotation shaft 7 to seal. That is to say, when the rotation shaft 7 is stationary, the fluid is sealed completely by pressure of the fluid storing chamber 8 and elastic force of the lip end portion 22 itself.

Such a seal member is disclosed in the United States patent application no. 5,860,656, which represents the closest prior art. It comprises a first sealing lip of a first sealing element, similar to the seal member 2 and a second seal member, on the sealing lip of which are formed grooves.

Further, when the rotation shaft 7 rotates, even if leakage is generated from an interface between the sliding tip portion 26 of the lip end portion 22 and the rotation shaft 7 to an outside 9, contact area of the rotation shaft seal with the peripheral face of the rotation shaft 7 is made small for the notched grooves 31 formed on the seal element 3, contact pressure between the grooves becomes high to tightly seal, hydrodynamic effect of the notched grooves 31 pushes back the fluid leaked to the outside 9, and the whole rotation shaft seal 1 can seal the high-pressure fluid.

And, generally, the sliding tip portion 26 of the lip end portion 22 is, for good sealing effect, formed sharply by molding the seal member 2 of rubber, or sharply formed by cutting after the molding.

However, some cooling media have had higher pressure than that of conventional cooling media, and the rotation frequency of the rotation shaft 7 has become higher along recent evolution in compressors of air conditioners on automobiles. When the conventional rotation shaft seal 1 mentioned above is applied to the evolved compressor, the sliding tip portion 26 of the seal member 2 of rubber and the sliding face of the seal element generate heat more than that of conventional seals because the seal member 2 of rubber is pressed to the rotation shaft 7 side, and the seal element 3 is also pressed to the peripheral face of the rotation shaft 7. Therefore, durability of the rotation shaft seal 1 is greatly reduced by heat generated by cracks generated on the lip end portion 22 of the seal member 2 of rubber, sludge of the sealed fluid, and increased abrasion of the seal member 2 of rubber and the seal element 3.

Although heat is easily generated by increased friction caused by decreased lubrication of the fluid because the contact pressure of the sliding tip portion 26 becomes large when the sliding tip portion 26 is sharply finished by cutting after the molding of the seal member 2, the heat amount is decreased by reduced friction for the lubrication of the fluid higher than that of the cutting-finished sliding tip portion 26 when the sliding tip portion 26 is not finished by cutting.

And, tightening force (fitting force to the rotation shaft 7) is made small and the contact pressure on the rotation shaft 7 can be reduced by forming the seal element 3 thin, and the heat amount is reduced thereby.

However, even if the seal member 2 of rubber formed by molding without cutting is used, although cross section of a mold corresponding to the sliding tip portion 26 becomes sharp triangle convex for finishing the sliding tip portion 26 relatively sharp, foreign matters such as bubble and impurities tend to be accumulated in the convex, the sliding tip portion 26 is not formed sharp, and forming defect in the seal member 2 of rubber is caused thereby. Further, depending on the accumulation of the foreign matters, mold washing process of the seal member 2 after the molding may become difficult.

And, in the conventional rotation shaft seal 1 attached to the rotation shaft 7, the seal element 3 is bent to the fluid storing chamber 8 side, pressing force of the seal element 3 to the rotation shaft 7 is strong on an inner peripheral edge portion 33 side of the seal element 3 and weak on a bent bottom portion 34 side. That is to say, sealing face pressure of a sliding face 32 becomes weak on the bent bottom portion 34 side, sufficient sealing effect of the notched groove 31 is not obtained near the bent bottom portion 34, and expected hydrodynamic effect may not work on all of the notched grooves 31.

And, in the rotation shaft 7 with higher pressure and rotation frequency than that of the conventional seal, the sliding face 32 of the seal element 3 is abraded early, sufficient hydrodynamic effect is not obtained for shallow notched grooves 31, and sealing effect of the seal element 3 may be spoiled.

Further, while the seal element 3 also has a role to prevent intrusion of outside air from the outside 9 because the outside 9 has relatively high pressure when the fluid storing chamber 8 is vacuum, sealing effect under the vacuum may be spoiled by reduced tightening force, namely, fitting force to the rotation shaft 7 caused when the seal element 3 is made thin.

It is therefore an object of the present invention to provide a rotation shaft seal, corresponding to high rotation frequency of the rotation shaft and high pressure of the cooling media, with which the sealability of the seal element is stabilized, abrasion on the seal element and the lip end portion is reduced, and durability of the seal becomes excellent.

This object is solved according to the present invention by rotation shaft seal including features of claim 1, 2, or 3.

The present invention will be described with reference to the accompanying drawings in which:
Figure 1A is a longitudinal cross-sectional view of a rotation shaft seal of the present invention;
Figure 1B is a longitudinal cross-sectional view of the rotation shaft seal of the present invention;
Figure 2 is an enlarged cross-sectional view of a lip portion of the rotation shaft seal of the present invention;
Figure 3A is a distribution of contact pressure of a sliding tip portion of a conventional shaft seal;
Figure 3B is a distribution of contact pressure of a sliding tip portion of the present invention;
Figure 4 is a longitudinal cross-sectional view of a conventional rotation shaft seal;
Figure 5A is a graph showing test results of the rotation shaft seal of the present invention; and
Figure 5B is a graph showing test results of the rotation shaft seal of the present invention.

Preferred embodiments of the present invention will now be described with reference to the accompanying drawings.

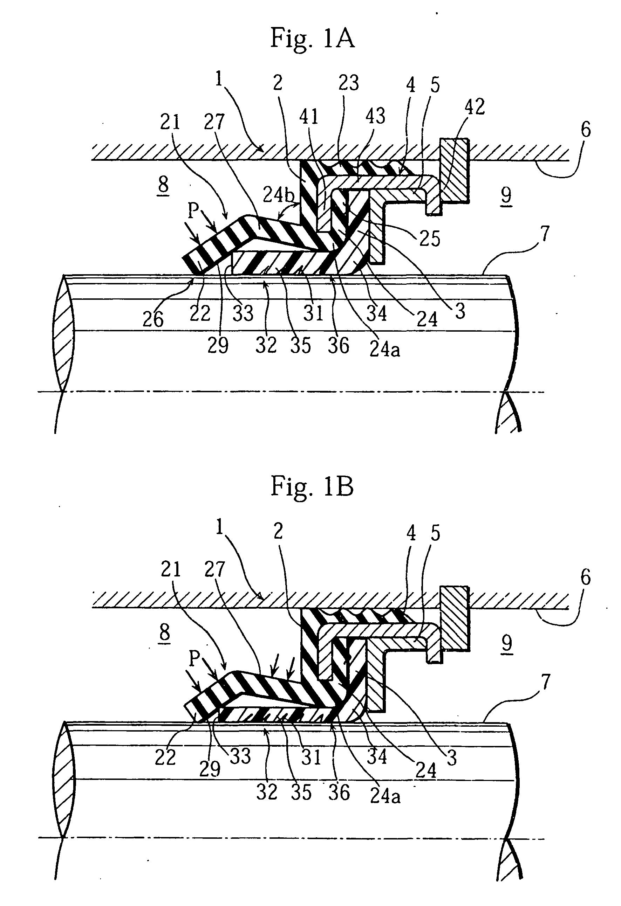

Figure 1 shows a rotation shaft seal 1 of the present invention used for an air compressor of an air conditioner for automobiles in which a high pressure cooling medium works on a fluid storing chamber 8 side. In Figure 1B, a seal element is made thin and the other members are same as in Figure 1A.

The rotation shaft seal 1 is disposed between a housing 6 such as a case of the compressor and a rotation shaft 7 and used for sealing fluid includes liquid and gas such as high-pressure cooling media.

Concretely, as shown in Figure 1, the rotation shaft seal 1 is composed of an outer case 4 having inner brim portions 41 and 42, a seal member 2 of rubber attached to a peripheral face of a cylinder portion 43 of the outer case 4 and both faces of the inner brim portion 41 by adhesion (including welding and baking) and unified, a seal element 3 having notched grooves 31, and an inner case 5.

The seal member 2 of rubber is composed of a cylindrical cover portion 23 of which peripheral face is formed in undulation in free state to obtain sealing effect by elastic force to an inner peripheral face of the housing 6, an inner brim cover portion 24 of which cross section is U-shaped covering both sides of the inner brim portion 41 on the fluid storing chamber 8 side, a portion 27 and a lip portion 21 protruding from an inner peripheral side of the inner brim cover portion 24 to the fluid storing chamber 8 side, and a small protruding portion 25 convex in free state and touching the seal element 3 on an outside 9 of the inner brim cover portion 24 to obtain sealing effect by elastic force.

The portion 27 gradually expands in diameter from a bent bottom portion 24a of lower side of the inner brim cover portion 24 in Figure 1 to the fluid storing chamber 8 side with approximately same wall thickness. However, the portion 27, which does not need to extend in free state before the rotation shaft seal 1 is attached to the rotation shaft 7, may be parallel to the rotation shaft 7 or slightly extending in the free state. As the embodiment shown in Figure 1, although it is preferable that the whole portion 27 extends with an inclination angle 24b formed with a side end face of the fluid storing chamber 8 of the inner brim cover portion 24 and a peripheral side face of the portion 27 smaller than 90 ° , the portion 27 may be almost parallel to the rotation shaft 7 near the bent bottom portion 24a (the inclination angle 24b is 90°) and extending in a middle portion of the cylinder portion 27.

And, the bent bottom portion 24a is touching a bent root portion 34 of the seal element 3 in the free state, and formed as to be press-fit to the bent root portion 34 in assembly. The bent bottom portion 24a, depending on contact pressure of the bent root portion 34, may be appropriately modified relating to the press-fit.

The lip portion 21 is composed of a lip end portion 22 gradually diminishing in diameter from the portion 27 to the fluid storing chamber 8 side and a sliding tip portion 26 sliding on a peripheral face of the rotation shaft 7. The sliding tip portion 26 has an arc-shaped cross-sectional configuration of which arc portion contacts the peripheral face of the rotation shaft 7 in assembly.

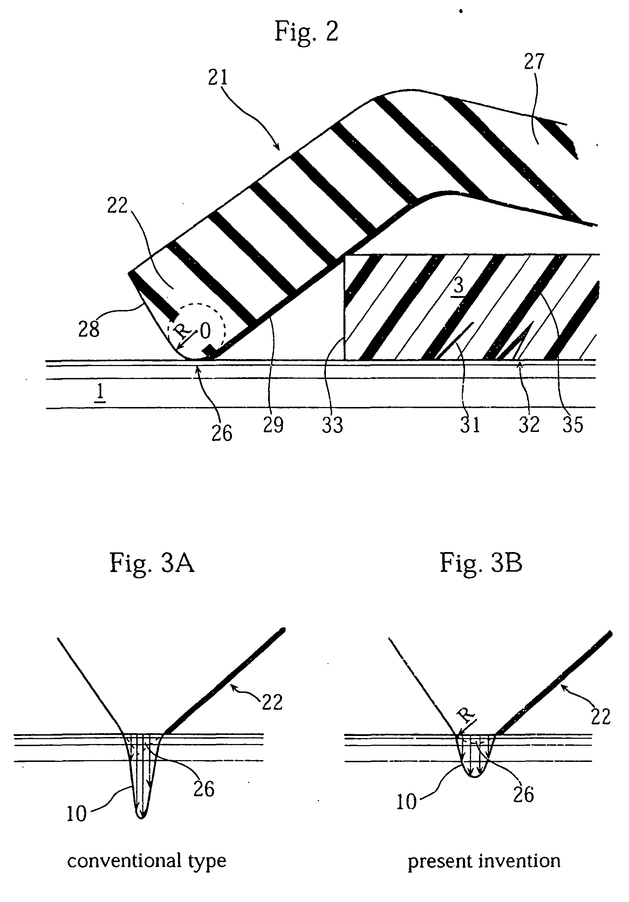

Further, as shown in Figure 2 showing the lip portion 21 enlarged, the sliding tip portion 26 having an arc-shaped cross section corresponding to an arc of a circle (shown with a broken line) of radius R of which center is a point 0 in the lip end portion 22, and formed by connecting smoothly the arc and an end face 28 and an inside face 29. The radius R is preferably arranged to be equal to or more than 0.1mm. Further, it is more preferable to arrange the radius R equal to or more than 0.15mm. If the radius R is in these ranges, the molded seal member 2 of rubber can be used without cutting, and forming defect, caused by foreign matter in a part of the mold for forming the sliding tip portion, is hardly generated.

Next, the seal element 3 shown in Figure 1 is formed with a resin such as PTFE into a flat ring before inserted to the rotation shaft 7, namely, in the free state.

And, as shown in Figure 1, an inner peripheral edge portion 33 is curved toward the fluid storing chamber 8 side to contact the peripheral face of the rotation shaft 7 with a certain width to form a sliding face 32, and the inner peripheral edge portion 33 contacts the inside face 29 of the seal member 2 of rubber. The lip portion 21 is elastically extended and the whole portion 27 is extended with approximately uniform inclination by contact of the inner peripheral edge portion 33 with the inside face 29.

In Figure 1B, the seal element 3 is formed to be thin for making a gap of triangle cross section, formed with the inside face 29 of the seal member 2 and the peripheral face of the rotation shaft 7 and the inner peripheral edge portion 33 of the seal element, small. That is to say, even if the lip end portion receives pressure of the fluid, the configuration of the lip end portion is stable because the inner peripheral edge portion 33 can contact a forth end of the inside face 29.

And, the notched groove 31 is formed on the sliding face 32 which contacts the peripheral face of the rotation shaft 7. The notched groove 31 is composed of plural coaxial circle of which center is the center of the flat seal element 3 in the free state or a spiral groove of which axis is the center of the seal element 3.

The notched groove 31 is formed by lathe as to incline from the sliding face 32 to the outside 9 with a cutting blade, or to extend straight from the sliding face 32 in diameter direction without inclination.

Further, it is preferable that cross section of the notched groove 31 formed near the outside 9 is open wider than that formed on the fluid storing chamber 8 side as shown in Figure 1. That is to say, it is preferable that all of the notched grooves 31 are closed in the seal element 3 in the free state, and the notched groove 31 on the fluid storing chamber 8 side is closed and the notched grooves 31 are successively opened from the fluid storing chamber 8 to the outside 9 in the attached state to the rotation shaft 7. Even if all of the notched grooves 31 are open in the free state, the notched grooves 31 can be formed as to successively open from the fluid storing chamber 8 to the outside 9 in the attached state. However, surface tension described below to prevent the fluid remaining in the notched grooves 31 from leaking toward the outside 9 is not obtained with this arrangement. And, the difference between open state and closed state of the notched grooves 31 in the free state depends on the width of the cutting blade forming the notched grooves 31.

And, a circumferential flat face 36 shields the notched grooves 31 to prevent the fluid remaining in the notched grooves 31 from leaking toward the outside 9. It is effective to dispose the circumferential flat face 36 on the bent root portion 34 of the seal element 3 receiving pressing force from the bent bottom portion 24a of the seal member 2 of rubber having high contact pressure.

Next, sealing function is described. In Figure 1, in the attached state to the rotation shaft 7, sealing pressure is improved on the bent root portion 34 because the bent bottom portion 24a of the seal member 2 of rubber presses the bent root portion 34 of the seal element 3 to the rotation shaft 7 side, and intrusion of the air from the outside 9 is prevented thereby.

And, when the fluid storing chamber 8 is pressurized, pressure P presses the lip portion 21 and the portion 27 to the peripheral face of the rotation shaft 7 to seal with elastic force of rubber. In the construction of the present invention as shown in Figure 1B, the gap of triangle cross section, formed with the inside face 29 of the lip portion 21 and the inner peripheral edge portion 33 of the seal element 3, is made small because the seal element 3 can be thin. Therefore, deformation caused by yielding of the lip end portion 22 of the seal member 2 of rubber is hardly generated, and heat generation, caused by contact between the lip end portion 22 and the rotation shaft 7 with excessively large area, is prevented.

Although the fluid in the fluid storing chamber 8 is sealed by the elastic force of rubber when the rotation shaft 7 is stationary, slight leakage is generated on the outside 9 when the rotation shaft 7 rotates because contact pressure is lower than that of conventional seals for an R-shaped arc formed on the sliding tip portion 26 of the lip end portion 22 as shown in Figure 3. The mark 10 in Figure 3 shows contact pressure distribution line. The higher the contact pressure becomes, the more the distribution line is extended below. Although leakage tends to be generated with the sliding tip portion 26 of the present invention for its low contact pressure, durability of the sliding tip portion 26 is improved because abrasion amount of the sliding tip portion 26 by heat and friction is decreased.

The fluid leaked from the sliding tip portion 26 is sealed by the seal element 3, contact pressure on the sealing face between the notched grooves 31 formed on the sliding face 32 of the seal element 3 to improve the sealability. And, in case that the notched groove 31 is a spiral groove, the fluid does not leak to the outside 9 even if the fluid intrudes into the groove for hydrodynamic effect that send back the fluid to the fluid storing chamber 8 along the rotation of the rotation shaft 7. Further, adding to increase of the contact pressure of the bent root portion 34, contact pressure of the whole sliding face 32 is increased because the inner peripheral edge portion 33 of the seal element 3 is pressed to the rotation shaft 7 side by the lip portion 21 of the seal member 2 of rubber for the high-pressure fluid, sealing effect of the notched grooves 31 is obtained on each of the notched grooves 31, and the hydrodynamic effect is sufficiently obtained.

And, sliding torque is decreased and durability of the seal element 3 is improved by restriction of abrasion on the sliding face 32 caused by friction heat generated by the rotation of the rotation shaft 7 because the fluid leaked from the sliding tip portion 26 gives lubrication effect to the sliding face 32 of the seal element 3 as a lubricant.

And, even if the leaked fluid is sent back to the fluid storing chamber 8 side by the hydrodynamic effect in the rotation, the fluid remaining in the notched grooves 31 may leak to the outside 9 when the rotation shaft stops. However, with an arrangement that the notched grooves 31 are formed as to close on the fluid storing chamber 8 side and successively open toward the outside 9, surface tension of the fluid in the notched groove 31 is generated from the outside 9 to the fluid storing chamber 8 side, and foreign matters (such as abraded matter and carbonated oil) in the notched grooves 31 effectively prevent fluid leakage even in the stationary state of the rotation shaft 7. Further, the circumferential flat face 36 continuing from the bent root portion 34 shields the notched grooves 31 to completely prevent the leakage to the outside 9.

And, sealing effect is effectively works against the fluid leakage between the housing 6 and the seal member 2 of rubber by making the cylindrical cover portion 23 of the seal member 2 of rubber into undulation to increase contact pressure on convex portions of the undulation which contact the inner peripheral face of the housing 6. And, similarly against the fluid leakage between the seal member 2 of rubber and the seal element 3, the small protruding portion 25, which contacts the seal element 3, effectively seals the fluid.

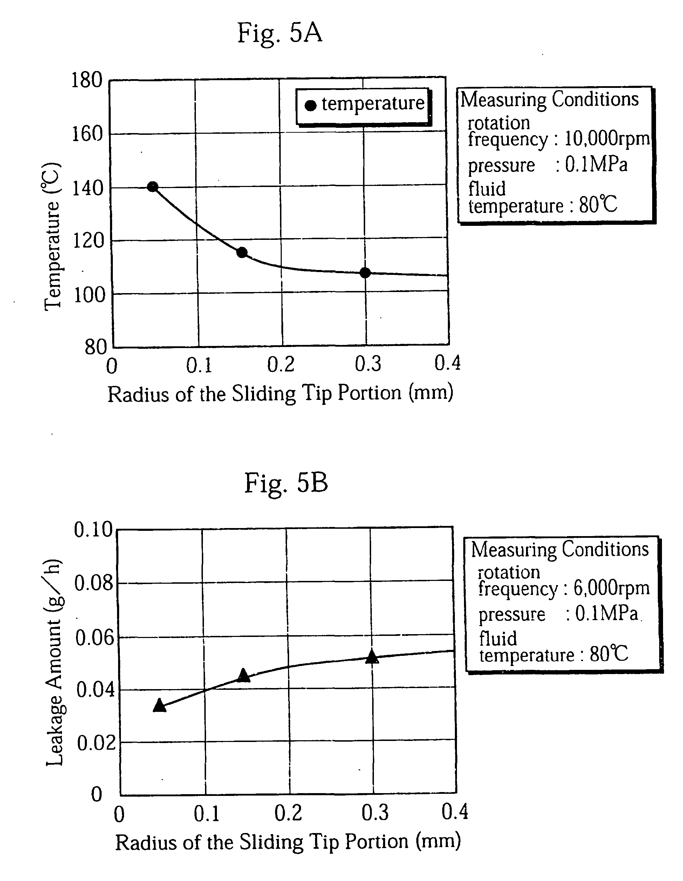

Next, test results conducted with the rotation shaft seal shown in Figure 1 as a sample on a relation between radius R of the sliding tip portion 26 of the lip end portion 22 and temperature on the sliding face 32 of the seal element 3 are shown in Figure 5A, and on a relation between the radius R of the sliding tip portion 26 of the lip end portion 22 and leakage amount to the outside 9 are shown in Figure 5B.

Figure 5A shows a tendency that the temperature (°C) of the sliding face 32 of the seal element 3 sharply decreases until the radius R of the sliding tip portion 26 becomes R = 0.1mm, and becomes stable around 110°C after a range between R = 0.1mm and R = 0.15mm. Further, Figure 5B shows that leakage amount (g/hour) to the outside 9 increases until the radius R of the sliding tip portion 26 becomes R = 0.1mm, and, although the leakage amount slightly increases along increase of the radius R, hardly changes after the range between R = 0.1mm and R = 0.15mm. These results show that the radius R of the sliding tip portion is preferably arranged to be larger than 0.1mm, and more preferably larger than 0.15mm. However, when the radius R becomes large, the seal member 2 of rubber may not have sufficient sealability in the stationary state of the rotation shaft under higher pressure than that of the measuring conditions of Figures 5A and 5B. Therefore, the radius R is 0.1mm to 0.5mm, preferably 0.15mm to 0.3mm.

And, thickness of the seal element 3, conventionally about 1mm, is 0.8mm in the present embodiment. To check sealability of the rotation shaft seal of the present invention and a conventional rotation shaft seal, 450-hour sealing test was conducted under the conditions that pressure is 0.1MPa, rotation frequency of the rotation shaft is 15,000rpm, and fluid temperature is 80°C. It was confirmed that the rotation shaft seal of the present invention can seal the fluid for 450 hours without leakage while leakage is generated in 310 hours in the conventional rotation shaft seal.

The thickness of the seal element 3 is preferably 0.5mm to 0.8mm because the hydrodynamic effect may not be sufficiently obtained when the notched groove is too shallow with excessively thin seal element 3.

While the embodiment of the present invention is described above, the embodiment may be freely modified within the scope of the present invention. For example, the sliding tip portion 26, formed with a single circle in the embodiment, may be formed with a curved line other than the arc composed of a single circle unless the sliding tip portion 26 is a sharp angle formed with only straight lines.

And, in case that the notched grooves 31 are forming independent coaxial circles, number of the circles may be increased and decreased, disposition pitch of the grooves may be uniform or not. And, if the groove 31 is a spiral groove, pitch of the spiral may be freely changed, and depth of the notched groove 31 is not restricted to a particular dimension.

According to the rotation shaft seal of the present invention, the contact pressure on the lip end portion is reduced by forming the sliding tip portion of the lip end portion of rubber sliding on the rotation shaft into an arc, and fluid leakage is generated on the low pressure side in rotation of the rotation shaft more than that with a conventional molded sharp lip end portion. However, the leaked fluid from the lip end portion of rubber works on the sliding face of the seal element as lubricant to strengthen the tightening force of the seal element, and the problems of heat generation and abrasion caused by increase of the contact pressure of the seal element is alleviated.

Further, the sliding tip portion of the lip end portion is formed approximately arc-shaped, for example, R-shaped, opening of a part of the mold for molding corresponding to the sliding tip portion of the lip end portion becomes larger than that of the sharp angle of the conventional lip end portion, and foreign matters such as bubbles, impure matters are hardly accumulated in the part. Consequently, the molded seal member of rubber can be used without finishing, forming defection problems of the lip end portion are solved, and production efficiency is improved with easy washing process of the mold.

And, the contact pressure can be concentrated on the bent root portion of the seal element because the bent bottom portion of the seal member of rubber presses the bent root portion of the seal element as to be press-fit to the rotation shaft for the portion which gradually expands in diameter from the bent bottom portion to the fluid storing chamber side as the bent portion of the seal member of rubber contacts the bent root portion of the seal element and a gap is formed between the extension cylinder portion of the seal element and the portion of the seal member of rubber. Therefore, the problem of the pressing force toward the rotational axis of the seal element which is strong on the inner peripheral edge portion side and weak on the bent root portion side of the seal element in conventional shaft seals is solved, sealing effect of all of the notched grooves is improved, and the hydrodynamic effect sufficiently works.

And, even if the fluid storing chamber side becomes vacuum, namely, the outside becomes relatively high-pressure, the high-pressure fluid (air) on the outside is prevented from intruding because the bent bottom portion of the seal member of rubber presses the bent root portion of the seal element to the rotation shaft to increase pressure on the sealing face of the bent root portion.

Further, as described above, the fluid leaked from the seal member of rubber works as a lubricant, the problem of heat generation and abrasion on the sliding face of the seal element is solved, and the seal element itself can be formed thin.

Adding to the above effects, the fluid getting into the notched groove is effectively prevented from leaking because the contact pressure of the circumferential flat face is increased by forming the circumferential flat face, which shields the notched groove, on the bent root portion of the seal element near a portion right below the bent bottom portion of the seal member of rubber.

According to the rotation shaft seal of the present invention as described above, heat generation by friction is restricted even under higher pressure and rotation frequency than that of conventional seals because the contact pressure is lower when the sliding tip portion of the seal member of rubber is formed into an arc than formed sharp.

And, although the fluid slightly leaks from the sliding tip portion of the seal member of rubber for the low contact pressure, the leaked fluid works as lubricant for the seal element to restrict heat generation caused by friction and abrasion of the seal element, and the leaked fluid is also effective to alleviate the sliding torque of the seal member of rubber and the seal element.

And, although sealing effect of the notched groove formed on the seal element is not sufficiently obtained because the contact pressure on the bent root portion in conventional seals, the contact pressure on the bent root portion is increased by the construction of the present invention, sealing effect and hydrodynamic effect are sufficiently obtained in all of the notched grooves, and sealability of the rotation shaft seal is improved thereby.

Adding to the above effects, intrusion of outside air is stopped even if the fluid storing chamber is vacuum and the seal element is formed thin because the bent bottom portion presses the bent root portion to the rotation shaft.

Further, in the mold forming the seal member of rubber, the part forming the sliding tip portion is not sharp but approximately arc-shaped in which foreign matters such as bubbles and impure matter hardly accumulate, and problem of forming defection is solved.

## Claims

1. A rotation shaft seal, mountable between a housing (6) and a rotation shaft (7) for sliding on the rotation shaft (7), comprising a seal element (3) and a seal member (2) of rubber, said seal member (2) having a lip end portion (22) and a lip portion (21) connected to an of axial portion (27), when mounted that seal member (2) contacting the seal element (3) on a fluid storing chamber (8) side
**characterized in that**
an inner peripheral edge portion (33) of the seal element (3) contacts an inside face (29) of the lip portion (21) so that when mounted the seal member (2) of rubber has the axial portion (27) gradually extending in diameter from a bent bottom portion (24a) toward the fluid storing chamber (8) side, and the lip portion (21) gradually diminishing in diameter from the axial portion (27) toward the fluid storing chamber (8) side.

2. The rotation shaft seal as set forth in claim 1, wherein, when mounted the bent bottom portion (24a) of the seal member (2) of rubber contacts a bent root portion (34) of the seal element (3), a gap is formed between an extension cylinder portion (35) of the seal element (3) and the axial portion (27) of the seal member (2) of rubber, and a sliding tip portion (26) of the lip end portion (22) is arc-shaped.

3. The rotation shaft seal as set forth in claim 2, wherein a circumferential flat face (36), which in use contacts a peripheral face of the rotation shaft (7) and shields a notched groove (31), is formed on the bent root portion (34) of the seal element (3) sliding on the peripheral face of the rotation shaft (7) near the bent bottom portion (24a) of the seal member (2) of rubber.

## Patentansprüche

1. Drehwellendichtung, die zwischen einem Gehäuse (6) und einer Drehwelle (7) zum Gleiten auf der Drehwelle (7) angebracht werden kann, mit einem Dichtungselement (3) und einem Dichtungsteil (2) aus Gummi, wobei das Dichtungsteil (2) einen Lippenendabschnitt (22) und einen Lippenabschnitt (21) aufweist, der mit einem axialen Abschnitt (27) verbunden ist, wobei im montierten Zustand das Dichtungsteil (2) das Dichtungselement (3) an der Seite einer Fluidaufbewahrungskammer (8) berührt,
**dadurch gekennzeichnet, dass**
ein innerer Umfangsrandabschnitt (33) des Dichtungselements (3) eine innenseitige Oberfläche (29) des Lippenabschnitts (21) berührt, so dass im montierten Zustand das Dichtungsteil (2) aus Gummi den axialen Abschnitt (27) so aufweist, dass er sich allmählich im Durchmesser von einem gebogenen, unteren Abschnitt (24a) zur Seite der Fluidaufbewahrungskammer (8) erweitert, und der Lippenabschnitt (21) einen von dem axialen Abschnitt (27) zur Seite der Fluidaufbewahrungskammer (8) allmählich abnehmenden Durchmesser aufweist.

2. Drehwellendichtung nach Anspruch 1, bei welcher im montierten Zustand der gebogene, untere Abschnitt (24a) des Dichtungsteils (2) aus Gummi einen gebogenen Fußabschnitt (34) des Dichtungselements (3) berührt, ein Spalt zwischen einem Zylinderfortsatzabschnitt (35) des Dichtungselements (3) und dem axialen Abschnitt (27) des Dichtungsteils (2) aus Gummi vorhanden ist, und ein Gleitspitzenabschnitt (26) des Lippenendabschnitts (22) bogenförmig ist.

3. Drehwellendichtung nach Anspruch 2, bei welcher eine ebene Umfangsoberfläche (36), die im Gebrauch eine Umfangsoberfläche der Drehwelle (7) berührt, und eine eingeschnittene Nut (31) abschirmt, auf dem gebogenen Fußabschnitt (34) des Dichtungselements (3) vorgesehen ist, der auf der Umfangsoberfläche der Drehwelle (7) gleitet, in der Nähe des gebogenen Fußabschnitts (24a) des Dichtungsteils (2) aus Gummi.

## Revendications

1. Dispositif d'étanchéité pour arbre tournant, pouvant être monté entre un boîtier (6) et un arbre tournant (7), en vue de glisser sur l'arbre tournant (7), comprenant un élément de joint d'étanchéité (3) et un élément de joint d'étanchéité (2) de caoutchouc, ledit élément de joint d'étanchéité (2) comportant une partie d'extrémité de lèvre (22) et une partie de lèvre (21) reliées à une partie axiale (27), lorsqu'il est monté, cet élément de joint d'étanchéité (2) est en contact avec l'élément de joint d'étanchéité (3) sur un côté de chambre de stockage de fluide (8), **caractérisé en ce que**
une partie de bord périphérique intérieur (33) de l'élément de joint d'étanchéité (3) est en contact avec une face intérieure (29) de la partie de lèvre (21) de sorte que, lorsqu'il est monté, l'élément de joint d'étanchéité (2) de caoutchouc a la partie axiale (27) s'étendant progressivement en termes de diamètre depuis une partie de fond coudée (24a) vers le côté de la chambre de stockage de fluide (8), et la partie de lèvre (21) diminuant progressivement en diamètre depuis la partie axiale (27) vers le côté de la chambre de stockage de fluide (8).

2. Dispositif d'étanchéité pour arbre tournant selon la revendication 1, dans lequel, lorsqu'il est monté, la partie de fond coudée (24a) de l'élément de joint d'étanchéité (2) en caoutchouc est en contact avec une partie de base coudée (34) de l'élément de joint d'étanchéité (3), un espace est formé entre une partie cylindrique d'extension (35) de l'élément de joint d'étanchéité (3) et la partie axiale (27) de l'élément de joint d'étanchéité (2) de caoutchouc, et une partie d'extrémité coulissante (26) de la partie d'extrémité de lèvre (22) est en forme d'arc.

3. Dispositif d'étanchéité pour arbre tournant selon la revendication 2, dans lequel une face plate circonférentielle (36), qui en utilisation est en contact avec une face périphérique de l'arbre tournant (7) et protège une rainure entaillée (31), est formée sur la partie de base coudée (34) de l'élément de joint d'étanchéité (3) glissant sur la face périphérique de l'arbre tournant (7) à proximité de la partie de base coudée (24a) de l'élément de joint d'étanchéité (2) de caoutchouc.
